# EUROPEAN PATENT APPLICATION

(11) **EP 3 922 398 A2**
(43) Date of publication of application: **15.12.2021**
(21) Application number: 21177918.6
(22) Date of filing: 07.06.2021
(51) Int. Cl.: B23K 26/348, B23K 103/20

(54) **LASER-ARC HYBRID WELDING APPARATUS**

(30) Priority: 11.06.2020 JP 2020101505
(71) Applicant: DAIHEN Corporation, Yodogawa-ku Osaka-shi, Osaka 532-8512 (JP)
(72) Inventor: FUJIWARA, Masayuki, Osaka-shi, 532-8512 (JP); TAMAKI, Ryoji, Osaka-shi, 532-8512 (JP)
(74) Representative: Zacco GmbH

(57) **Abstract**

A laser-arc hybrid welding apparatus (1) used for dissimilar material welding includes: a laser-beam irradiation device constituted of a laser oscillator (60) and a laser torch (40); and an arc welding device constituted of a welding power supply (30) and a welding torch (10). The arc welding device changes an arc output (a welding current) at a frequency between a frequency f1 and a frequency f2. At the first frequency f1, an output change in a welding progressing direction occurs in a cycle of 12 mm when welding is performed at a prescribed welding speed. At the second frequency f2, the output change in the welding progressing direction occurs in a cycle of 2 mm when welding is performed at the prescribed welding speed. The welding speed is from 0.8 m/min to 2.0 m/min.

## Description

### BACKGROUND OF THE INVENTION

### Field of the Invention

The present disclosure relates to a laser-arc hybrid welding apparatus that can be used for dissimilar material welding.

### Description of the Background Art

Japanese Patent Laying-Open No. 2006-224146 discloses a dissimilar material welding process by which aluminum or an aluminum alloy material (an aluminum-based material) and a steel material can be welded to each other. According to this dissimilar material welding process, friction stir welding is performed by inserting a pin portion of a rotationally driven welding tool into a portion where an aluminum-based material overlaps with a steel material having an aluminum-based plated layer formed on its surface. In this case, the pin portion is inserted from the aluminum-based material side.

As another example of the dissimilar material welding process, Japanese Patent Laying-Open No. 2019-7623 discloses a dissimilar material welding process performed using a dissimilar material welding rivet. Further, Japanese Patent Laying-Open No. 2006-167725 discloses a dissimilar material welding process performed with laser brazing.

In welding for dissimilar material welding (for example, welding between an aluminum alloy sheet and a hot-dip galvanized steel sheet such as a GI steel sheet or a GA steel sheet), welding produces an intermetallic compound (IMC) at a bonding interface. Since the intermetallic compound is more brittle than a base material, a weld may peel off and its joint strength may decrease in a portion where the intermetallic compound is produced.

The above-mentioned process by friction stir welding physically breaks an intermetallic compound, which also causes a problem that machining marks remain at a portion where welding ends. Other dissimilar material welding process also cause problems such as insufficient joint strength, a complicated welding process, and a higher running cost in the execution of construction.

### SUMMARY OF THE INVENTION

The present disclosure has been made to solve the above-described problems, and aims to implement dissimilar material welding with high joint strength using a laser-arc hybrid welding apparatus.

A laser-arc hybrid welding apparatus according to the present disclosure is used for dissimilar material welding, and includes: a laser-beam irradiation device that irradiates a weld with a laser beam; and an arc welding device that generates an arc between the arc welding device and the weld. At least one of the laser-beam irradiation device and the arc welding device changes an output from the at least one of the laser-beam irradiation device and the arc welding device at a frequency between a first frequency and a second frequency. At the first frequency, an output change in a welding progressing direction (a direction in which welding progresses) occurs in a cycle of 12 mm when welding is performed at a prescribed welding speed. At the second frequency, the output change in the welding progressing direction occurs in a cycle of 2 mm when welding is performed at the prescribed welding speed. The prescribed welding speed is from 0.8 m/min to 2.0 m/min.

The present laser-arc hybrid welding apparatus is used for dissimilar material welding. According to the dissimilar material welding, in an intermetallic compound generated at a bonding interface, cracking may propagate along the bonding interface, and the weld may peel off. The present laser-arc hybrid welding apparatus performs welding under the conditions described above, to thereby form protrusions and recesses in a welding depth direction at a pitch of about 2 mm to about 12 mm in the welding progressing direction such that a penetration shape of the base material has such protrusions and recesses and also that such protrusions and recesses are provided at a position where the intermetallic compound is produced. Thereby, propagation of cracking in the intermetallic compound can be suppressed as compared with the case where protrusions and recesses are not formed.

An excessively low frequency prevents formation of sufficient protrusions and recesses, thereby reducing the effect of suppressing propagation of cracking. An excessively high frequency also causes averaging of the heat input to prevent formation of sufficient protrusions and recesses, thereby reducing the effect of suppressing propagation of cracking. Thus, the present laser-arc hybrid welding apparatus performs welding under the above-described conditions to thereby allow formation of appropriate protrusions and recesses. Accordingly, the present laser-arc hybrid welding apparatus allows dissimilar material welding with high joint strength.

The laser-beam irradiation device may include an adjustment mechanism that adjusts a shape of an irradiated region irradiated with a laser beam. The adjustment mechanism may enlarge the irradiated region in a width direction of welding as compared with irradiation without the adjustment mechanism in the laser-beam irradiation device and may adjust the shape of the irradiated region such that a distribution, in the width direction, of a quantity of heat input by a laser beam exhibits a prescribed profile. The prescribed profile shows that the quantity of heat input in a central portion in the width direction is equal to or smaller than the quantity of heat input at an end in the width direction.

The above-described adjustment mechanism is provided, so that the irradiated region irradiated with a laser beam is enlarged in the width direction of welding and the quantity of heat input in the central portion in the width direction is suppressed. This allows formation of a weld bead with a large width while suppressing the amount of generated intermetallic compound (which will be described later in detail). Consequently, the joint strength can be ensured.

The laser-beam irradiation device may change a laser output at the frequency, and the arc welding device may generate an arc at a constant average value of a welding current.

The laser energy density is higher than the arc energy density. Thus, protrusions and recesses in the penetration shape and at the position where an intermetallic compound is produced can be roughened (non-smooth) more by changing the laser output than by changing the arc output. Therefore, the laser-arc hybrid welding apparatus allows effective formation of protrusions and recesses in the penetration shape and at the position where an intermetallic compound is produced.

The arc welding device may change an average value of a welding current at the frequency, and the laser-beam irradiation device may irradiate the weld with a laser beam at constant output power.

The output from the arc welding device is generally more easily adjusted than that from the laser-beam irradiation device. Therefore, the present laser-arc hybrid welding apparatus allows easy formation of protrusions and recesses in the penetration shape and at the position where an intermetallic compound is produced.

A range in which the average value of the welding current changes at the above-mentioned frequency may be from 10A to 100A.

This allows easy and effective formation of protrusions and recesses in the penetration shape and at the position where an intermetallic compound is produced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing an overall configuration of a laser-arc hybrid welding apparatus according to a first embodiment.
Fig. 2 is a diagram showing an exemplary cross section of a weld in fillet welding of a lap welded joint.
Fig. 3 is a diagram schematically showing a cross section of a contact portion shown in Fig. 2, which is taken along a welding progressing direction.
Fig. 4 is a diagram of an experiment result showing an effect of suppressing propagation of cracking in an IMC layer by oscillation of an arc output.
Fig. 5 is a diagram schematically showing, as a comparative example, a cross section of the contact portion obtained when an arc output and a laser output are constant.
Fig. 6 is a diagram illustrating a relation between a frequency at which the arc output is changed and a welding speed.
Fig. 7 is a diagram showing an exemplary waveform output from an arc welding device.
Fig. 8 is a diagram schematically showing a cross section of a contact portion taken along a welding progressing direction, which is obtained in welding by a laser-arc hybrid welding apparatus according to a second embodiment.
Fig. 9 is a diagram schematically showing a configuration of a laser torch according to a third embodiment.
Fig. 10 is a diagram showing an exemplary two-dimensional shape of an irradiated region.
Fig. 11 is a diagram showing a distribution of a quantity of heat input in a width direction of welding.

### DESCRIPTION OF THE PREFERRED EMBODIMENTS

The embodiments of the present disclosure will be described below in detail with reference to the accompanying drawings. While a plurality of embodiments will be described below, it has been originally intended at the time of filing of the present application to appropriately combine the configurations described in the respective embodiments. In the accompanying drawings, the same or corresponding portions are denoted by the same reference characters, and description thereof will not be repeated.

### [First Embodiment]

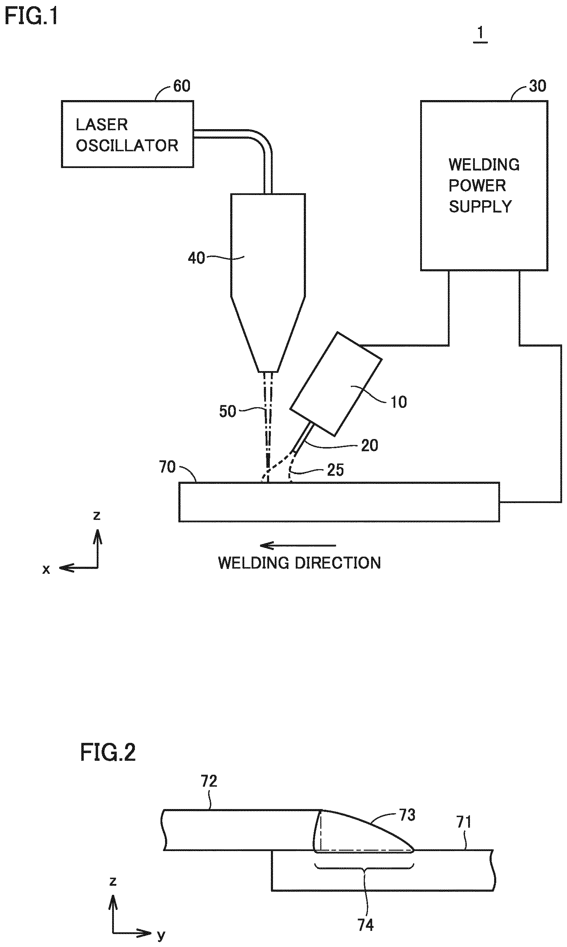

Fig. 1 is a diagram showing an overall configuration of a laser-arc hybrid welding apparatus according to a first embodiment of the present disclosure. Referring to Fig. 1, a laser-arc hybrid welding apparatus 1 (which may be hereinafter simply referred to as a "hybrid welding apparatus 1") includes a welding torch 10, a weld wire 20, a welding power supply 30, a laser torch 40, and a laser oscillator 60.

Hybrid welding apparatus 1 can be used in welding for dissimilar material welding, which means welding of dissimilar materials that are different in main component. Hybrid welding apparatus 1 can be used, for example, for welding between an aluminum alloy sheet and a hot-dip galvanized steel sheet such as a GI steel sheet or a GA steel sheet. Not only soft aluminum but also hard aluminum such as aluminum No. 5000 series (for example, 5052), No. 6000 series (for example, 6063), or No. 7000 series (for example, 7075) defined under JIS can be applicable to the aluminum alloy sheet. With the use of hybrid welding apparatus 1, one and the other of base materials 70 to be welded to each other are welded, for example, by a lap fillet welded joint or a flare welded joint.

Welding torch 10 and welding power supply 30 constitute an arc welding device that performs welding by producing an arc between welding torch 10 and a portion of base material 70 to be welded. Welding torch 10 supplies weld wire 20 and shield gas (that is not shown) toward a portion of base material 70 to be welded. By receiving supply of a welding current from welding power supply 30, welding torch 10 generates an arc 25 between a tip end of weld wire 20 and the portion of base material 70 to be welded, and also, supplies shield gas (argon gas, carbon dioxide or the like) toward a weld.

Welding power supply 30 generates a welding voltage and a welding current for arc welding and outputs the generated welding voltage and welding current to welding torch 10. Welding power supply 30 controls also a feed rate of weld wire 20 in welding torch 10.

Laser torch 40 and laser oscillator 60 constitute a laser-beam irradiation device that performs welding by applying a laser beam toward a portion of base material 70 to be welded. Laser torch 40 receives supply of a laser beam from laser oscillator 60 and emits a laser beam toward the portion of base material 70 to be welded. The laser beam from laser torch 40 is applied to the vicinity of arc 25 generated from welding torch 10. In hybrid welding apparatus 1, a laser beam is applied forward of arc 25 in the direction in which welding progresses. The laser beam applied forward of arc 25 can stabilize arc 25.

In hybrid welding apparatus 1 according to the present first embodiment, the output from the arc welding device constituted of welding torch 10 and welding power supply 30 is oscillated at a frequency between a frequency f1 and a frequency f2 (f2 > f1). Specifically, a welding current changes instantaneously at a high frequency (for example, at the level of 100 Hz) for each droplet transfer. In hybrid welding apparatus 1, the average value of the welding current is oscillated at a frequency between frequencies f1 and f2.

In this case, at first frequency f1, an output change in a welding progressing direction occurs in a cycle of 12 mm when welding is performed at a prescribed welding speed. At second frequency f2, the output change in the welding progressing direction occurs in a cycle of 2 mm when welding is performed at the prescribed welding speed. The prescribed welding speed is from 0.8 m/min to 2.0 m/min.

In the present first embodiment, the range in which the average value of the welding current changes is set as appropriate at a value between 10A and 100A. In the present first embodiment, the output from the laser-beam irradiation device constituted of laser torch 40 and laser oscillator 60 is constant. The following describes the reason why the output from the arc welding device is changed as described above in hybrid welding apparatus 1. In the following, the "welding current" means an average value of a welding current unless otherwise specified. Also, the output from the arc welding device may also be simply referred to as an "arc output".

Fig. 2 is a diagram showing an exemplary cross section of a weld in fillet welding of a lap welded joint. Fig. 2 shows a cross section along a y-z plane perpendicular to the direction in which welding progresses (an x direction in Fig. 1).

Referring to Fig. 2, in the present example, base material (welded material) 70 includes a GI material 71 and an aluminum alloy sheet 72 stacked on GI material 71. Also, a weld bead 73 is formed at an end of aluminum alloy sheet 72 on GI material 71 such that weld bead 73 is welded to GI material 71 at a contact portion 74.

In welding for dissimilar material welding, welding produces an intermetallic compound at a bonding interface (contact portion 74). In the case of dissimilar material welding between GI material 71 and aluminum alloy sheet 72, the resultant intermetallic compound is an alloy of aluminum and iron (for example, FeAl, Fe₃Al, Fe₂Al₅, or the like). Since the intermetallic compound is more brittle than base material 70 (GI material 71 and aluminum alloy sheet 72), peeling off of weld bead 73 and reduced joint strength may occur in contact portion 74. Specifically, cracking may propagate along the layer in which an intermetallic compound is produced, and thus, weld bead 73 may peel off from this layer as a boundary.

As a result of various experiments conducted for suppressing cracking along the layer in which an intermetallic compound is produced, the present inventors have found that progress of cracking along this layer can be suppressed by oscillating the arc output (welding current) at a frequency between frequencies f1 and f2 such that an output change in the welding progressing direction occurs in a cycle of 2 mm to 12 mm, which will be more specifically described below.

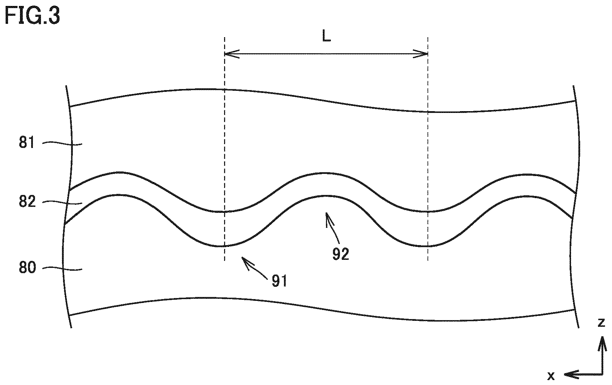

Fig. 3 is a diagram schematically showing a cross section of contact portion 74 shown in Fig. 2, which is taken along the welding progressing direction. Fig. 3 shows a cross section taken along an x-z plane perpendicular to a y direction in Fig. 2.

Referring to Fig. 3, an IMC layer 82 of an intermetallic compound is formed between an Fe layer 80 of GI material 71 and an Al layer 81 of weld bead 73. As described above, in the present first embodiment, the arc output (the welding current) is oscillated at a frequency between frequencies f1 and f2. In this case, a region 91 is welded with an arc output relatively larger than that for a region 92. Region 92 is welded with an arc output relatively smaller than that for region 91.

As shown in the figure, in region 91 for which the arc output is relatively large, the penetration into Fe layer 80 is deep. In region 92 for which the arc output is relatively small, the penetration into Fe layer 80 is shallow. Thus, the penetration shape of Fe layer 80 has protrusions and recesses in accordance with oscillation of the arc output. Further, also at the position where IMC layer 82 is formed between Fe layer 80 and Al layer 81, protrusions and recesses are formed in accordance with oscillation of the arc output. This can suppress propagation of cracking in the x direction in IMC layer 82 that is relatively more brittle than Fe layer 80 and Al layer 81.

When the arc output is changed at an excessively low frequency, an interval L of a protrusion and a recess of IMC layer 82 is relatively long, so that the effect of suppressing propagation of cracking in IMC layer 82 is reduced. When the arc output is changed at an excessively high frequency, the heat input by an arc is averaged, which prevents formation of sufficient protrusions and recesses. Thereby, the effect of suppressing propagation of cracking is reduced.

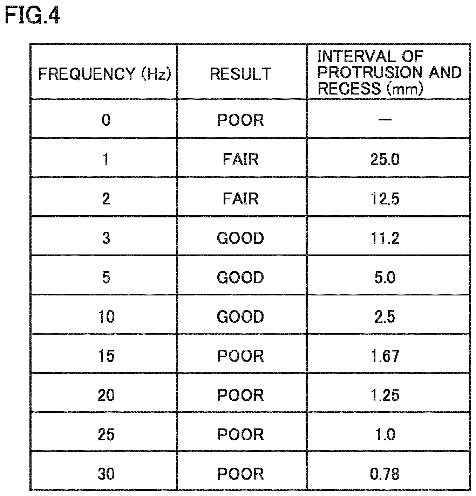

Fig. 4 is a diagram of an experiment result showing an effect of suppressing propagation of cracking in IMC layer 82 by oscillation of the arc output. The experiment was conducted in lap fillet welding of: an upper sheet made of a hard aluminum alloy sheet (A6063) having a thickness of 2.0 mm; and a lower sheet made of a hot-dip galvanized steel sheet (SGCC) having a thickness of 1.6 mm, under the conditions of: a laser output of 2 kW; an arc welding setting of 100A-18V; and a welding speed of 1.5 mm/min. Then, at a constant laser output, the arc output (welding current) was oscillated to perform welding, and the bottom portion of the melted portion was examined through macro observation.

Fig. 4 shows: results as to whether or not IMC layer 82 was formed in a protruding and recessed shape or in a wave shape along the bonding interface at each oscillation frequency of the arc output, and suppression of progress of cracking originated from the intermetallic compound was observed; and a cycle in which the output changed in the welding progressing direction (an interval of a protrusion and a recess).

Referring to Fig. 4, the result "Good" indicates that IMC layer 82 was formed in a protruding and recessed shape or in a wave shape along the bonding interface, and suppression of progress of cracking originated from the intermetallic compound was observed. The result "Fair" indicates that IMC layer 82 was formed in a protruding and recessed shape or in a wave shape along the bonding interface, but suppression of progress of cracking originated from the intermetallic compound was not observed. The result "Poor" indicates that sufficient protrusions and recesses were not formed along the bonding interface, and suppression of progress of cracking originated from the intermetallic compound was not observed.

From the results shown in Fig. 4, it is considered that the effect of suppressing propagation of cracking in IMC layer 82 is achieved in a range in which the output change in the welding progressing direction occurs in a cycle (an interval of a protrusion and a recess) of about 2 mm to about 12 mm. Thus, in hybrid welding apparatus 1 according to the present first embodiment, the arc output is oscillated such that the output change in the welding progressing direction occurs in a cycle of 2 mm to 12 mm.

Again referring to Fig. 3, when the arc output is changed in an excessively narrow range, the difference between the penetration depth into region 91 and the penetration depth into region 92 is relatively small, which prevents formation of effective protrusions and recesses at the position where IMC layer 82 is formed. In the present hybrid welding apparatus 1, the arc output (the welding current) is cyclically changed in a range from about 10A to about 100A, thereby allowing effective formation of protrusions and recesses in the penetration shape and at the position where IMC layer 82 is formed.

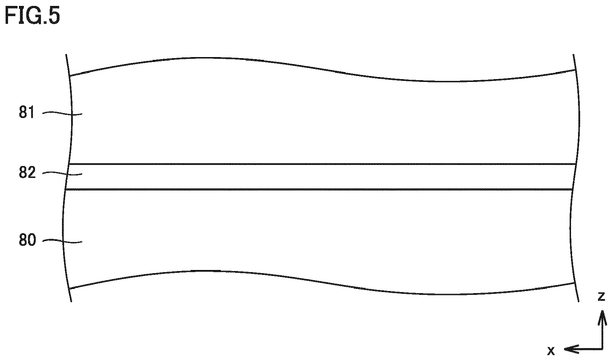

Fig. 5 is a diagram schematically showing, as a comparative example, a cross section of contact portion 74 obtained when the arc output and the laser output are constant. Fig. 5 corresponds to the above-mentioned Fig. 3.

Referring to Fig. 5, when the arc output and the laser output are constant, the penetration shape (the penetration depth) of Fe layer 80 is constant, and IMC layer 82 formed between Fe layer 80 and Al layer 81 also has a flat planar shape. In this case, cracking occurring once in IMC layer 82 that is relatively more brittle than Fe layer 80 and Al layer 81 may propagate along such planar IMC layer 82 and may further progress. In contrast, in the present first embodiment, since protrusions and recesses exist at the position where IMC layer 82 is formed as shown in Fig. 3, propagation of cracking along IMC layer 82 can be suppressed.

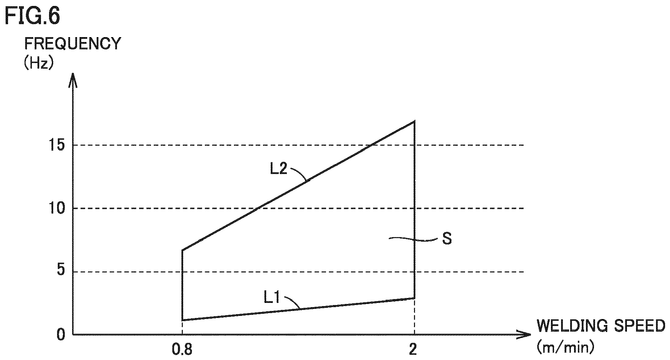

Fig. 6 is a diagram showing a range of a frequency at which the arc output is oscillated. In Fig. 6, the ordinate represents a frequency (Hz) at which the arc output is oscillated, and the abscissa represents a welding speed (m/min) of hybrid welding apparatus 1. In the present example, the welding speed can be set in a range from 0.8 m/min to 2.0 m/min. Within the range of this welding speed, the effective oscillation frequency of the arc output is shown.

Referring to Fig. 6, a line L1 represents a frequency f1 at which the output change in the welding progressing direction occurs in a cycle (interval L of a protrusion and a recess of IMC layer 82) of 12 mm. When the welding speed is 0.8 m/min, frequency f1 is 1.1 Hz. When the welding speed is 2.0 m/min, frequency f1 is 2.8 Hz.

A line L2 represents frequency f2 at which the output change in the welding progressing direction occurs in a cycle (interval L of a protrusion and a recess of IMC layer 82) of 2 mm. When the welding speed is 0.8 m/min, frequency f2 is 6.7 Hz. When the welding speed is 2.0 m/min, frequency f2 is 16.7 Hz. By performing welding under the condition within a region S surrounded by the lines, the arc output can be oscillated to thereby provide IMC layer 82 with protrusions and recesses at intervals of 2 mm to 12 mm in the welding progressing direction.

When the arc output is changed in an excessively narrow range, sufficient protrusions and recesses may not be formed. In the present hybrid welding apparatus 1, the average value of the welding current is cyclically changed in a range from about 10A to about 100A, thereby allowing formation of IMC layer 82 having sufficient protrusions and recesses at the bonding interface.

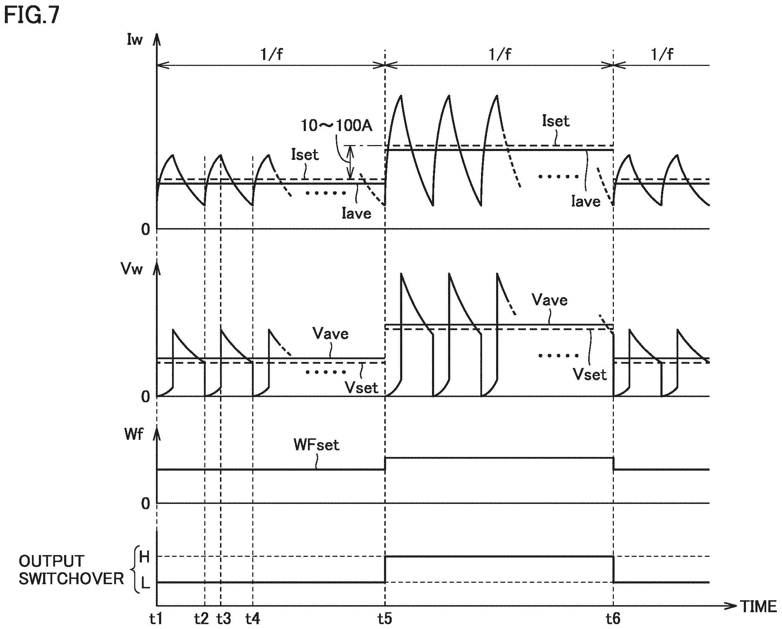

Fig. 7 is a diagram showing an exemplary waveform output from the arc welding device according to the present first embodiment. By way of example, Fig. 7 shows waveforms of a welding current Iw and a welding voltage Vw during welding of a short circuiting transfer type. In Fig. 7, the term "welding current" indicates a true current value that is not an average value.

Referring to Fig. 7, welding power supply 30 (Fig. 1) performs constant voltage control to adjust welding current Iw such that welding voltage Vw reaches a setting voltage Vset. A wire feed rate Wf is determined based on a setting current Iset.

Welding current Iw and welding voltage Vw change instantaneously in each droplet transfer. Specifically, for example, at time t2, weld wire 20 contacts base material 70, so that a short-circuit state occurs between weld wire 20 and base material 70. Thereby, welding voltage Vw decreases to about 0V.

Since welding power supply 30 performs constant voltage control, welding current Iw abruptly increases as welding voltage Vw decreases. As welding current Iw increases, resistance heating occurs in weld wire 20, so that welding voltage Vw gradually increases.

When weld wire 20 starts to melt due to the resistance heating in weld wire 20, this weld wire 20 that has started to melt becomes narrow due to the pinch effect caused by welding current Iw. Thus, the resistance value of weld wire 20 increases, thereby further facilitating resistance heating. Consequently, weld wire 20 is melted and disconnected to thereby generate an arc between weld wire 20 and base material 70.

Upon generation of an arc, weld wire 20 abruptly burns up due to warming-up of weld wire 20 during the short-circuit period from time t2 to time t3. Consequently, the arc length increases, and at time t3, welding voltage Vw abruptly rises.

Since welding power supply 30 performs constant voltage control, welding current Iw decreases as welding voltage Vw increases. As welding current Iw decreases and weld wire 20 is supplied, weld wire 20 contacts base material 70 at time t4, so that a short-circuit state again occurs between weld wire 20 and base material 70.

In this way, welding current Iw and welding voltage Vw change instantaneously in each droplet transfer (for example, at the level of 100 Hz). In hybrid welding apparatus 1 according to the present first embodiment, then, the arc welding device operates such that an average current lave indicating an average value of welding current Iw oscillates at a frequency f.

Specifically, in accordance with a low (L) output period and a high (H) output period that are alternately switched over at frequency f, setting current Iset is set such that average current Iave changes in a prescribed range, and setting voltage Vset is set such that average current lave reaches setting current Iset. Then, welding current Iw is adjusted such that welding voltage Vw reaches setting voltage Vset. The prescribed range in which average current lave changes is from 10A to 100 A, for example.

When constant voltage control (at constant setting voltage Vset) is performed at constant wire feed rate Wf (i.e., at constant setting current Iset) during each of the low output period and the high output period, the arc length and average current Iave each are maintained constant by the self-control action of the arc length. Therefore, setting voltage Vset and setting current Iset are set as appropriate during each of the low output period and the high output period, and thereby, average current lave can be controlled to be constant at a desired value.

The manner of arc welding is not limited to a short circuiting transfer type in which a short circuit and an arc are alternately repeated, but may be pulse welding in which a peak period and a base period are alternately repeated. In the case of pulse welding, setting voltage Vset is cyclically changed such that average current lave changes at frequency f in a range from 10A to 100A. Then, the peak current and the base current are modulated such that an average value Vave of welding voltage Vw reaches setting voltage Vset, with the result that average current Iave is controlled to reach a target value.

As described above, in the present first embodiment, the arc output is oscillated such that the output change in the welding progressing direction occurs in a cycle of 2 mm to 12 mm, thereby forming protrusions and recesses in the penetration shape of the base material and in IMC layer 82. Accordingly, propagation of cracking in the layer in which an intermetallic compound is produced can be suppressed as compared with the case where protrusions and recesses are not formed.

Further, in the present first embodiment, the output from the arc welding device is changed for forming protrusions and recesses in the penetration shape and at the position where an intermetallic compound is produced. The output from the arc welding device is generally more easily adjusted than that from the laser-beam irradiation device. Thus, the present first embodiment allows easy formation of the above-mentioned protrusions and recesses.

### [Second Embodiment]

In the above-described first embodiment, the output from the arc welding device constituted of welding torch 10 and welding power supply 30 is cyclically changed. In the present second embodiment, the output from the laser-beam irradiation device constituted of laser torch 40 and laser oscillator 60 is cyclically changed.

The laser energy density is higher than the arc energy density. Thus, protrusions and recesses in the penetration shape and at the position where an intermetallic compound is produced can be roughened (non-smooth) more by changing the laser output than by changing the arc output.

Again referring to Fig. 1, in hybrid welding apparatus 1 according to the second embodiment, the output from the laser-beam irradiation device constituted of laser torch 40 and laser oscillator 60 is changed at a frequency between frequencies f1 and f2 (f2 > f1). Thus, laser oscillator 60 changes the laser output at the above-mentioned frequency. For example, laser oscillator 60 may oscillate a pulsed laser beam at the above-mentioned frequency with a duty ratio of 50%. In the present second embodiment, the output from the arc welding device constituted of welding torch 10 and welding power supply 30 is constant.

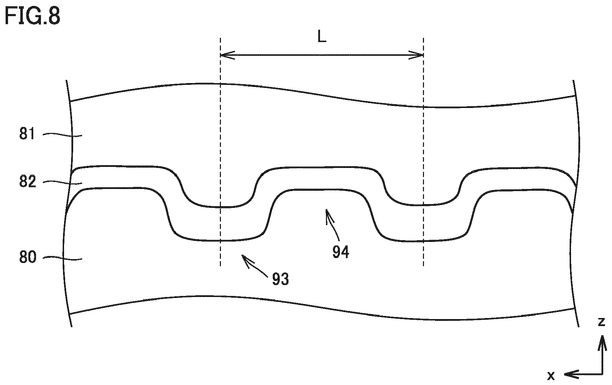

Fig. 8 is a diagram schematically showing a cross section of a contact portion 74 taken along a welding progressing direction, which is obtained in welding by a laser-arc hybrid welding apparatus 1 according to the second embodiment. Fig. 8 corresponds to the above-mentioned Fig. 3. In other words, Fig. 8 also shows a cross section taken along the x-z plane perpendicular to the y direction in Fig. 2.

Referring to Fig. 8, in the present second embodiment, welding is performed by cyclically changing the laser output. In this case, a region 93 is welded with a laser output relatively larger than that for a region 94. Region 94 is welded with a laser output relatively smaller than that for region 93.

As shown in the figure, in region 93 for which the laser output is relatively large, the penetration into Fe layer 80 is deep. In region 94 for which the laser output is relatively small, the penetration into Fe layer 80 is shallow. Thus, the penetration shape of Fe layer 80 has protrusions and recesses in accordance with the cyclical change of the laser output. Further, also at the position where IMC layer 82 is formed between Fe layer 80 and Al layer 81, protrusions and recesses are formed in accordance with the cyclical change of the laser output. This can suppress propagation of cracking in the x direction in IMC layer 82 that is relatively more brittle than Fe layer 80 and Al layer 81.

Further, in the present second embodiment, the laser output that is higher in energy density than the arc output is changed. Thus, the generated protrusions and recesses change more steeply (the protrusions and recesses are formed more roughly) than in the case where the arc output is oscillated as in the first embodiment. Therefore, protrusions and recesses in the penetration shape and in IMC layer 82 can be effectively formed.

Also in the present second embodiment, when the laser output is changed at an excessively low frequency, interval L of a protrusion and a recess of IMC layer 82 is relatively long, so that the effect of suppressing propagation of cracking in IMC layer 82 is reduced. When the laser output is changed at an excessively high frequency, the heat input by a laser beam is averaged, which prevents formation of sufficient protrusions and recesses. Thereby, the effect of suppressing propagation of cracking is reduced. In hybrid welding apparatus 1 according to the present second embodiment, the laser output is changed such that the output change in the welding progressing direction occurs in a cycle of 2 mm to 12 mm, thereby allowing formation of appropriate protrusions and recesses in the penetration shape and at the position where IMC layer 82 is formed.

As described above, according to the present second embodiment, the laser output with high energy density is changed for forming protrusions and recesses in the penetration shape of the base material and in IMC layer 82, so that protrusions and recesses in the penetration shape and in IMC layer 82 can be effectively formed.

### [Third Embodiment]

As the quantity of heat input (J) to the weld is larger, the molten weld pool solidifies at a slower rate, thereby increasing the amount of the intermetallic compound generated due to welding. In order to increase the irradiation energy density in an irradiated region so as to effectively melt a member, a laser beam is normally adjusted to be focused on the irradiated region. In this case, however, the quantity of heat input to the weld increases to thereby increase the amount of generated intermetallic compound as described above, with the result that the joint strength may decrease.

Thus, it is conceivable to suppress the quantity of heat input in order to suppress the amount of generated intermetallic compound. When the quantity of heat input is suppressed, however, the area of joining between a weld bead and a base material decreases, which may result in decreased joint strength. Such decreased joint strength due to the decreased area of joining can be overcome by increasing a width of a weld bead.

It is conceivable to defocus a laser beam in order to suppress the quantity of heat input. Simply by defocusing a laser beam, however, the quantity of heat input in the width direction of welding is distributed such that the quantity of heat input is maximum in a central portion and decreases toward an end since the two-dimensional shape of the laser-beam irradiated region is normally circular. Therefore, in a portion distant from the central portion (for example, an end in the width direction), the quantity of heat input may be insufficient and the joint strength may be insufficient.

Thus, in the present third embodiment, laser torch 40 includes an adjustment mechanism that adjusts the shape of the irradiated region irradiated with a laser beam and the distribution of the irradiation energy density of the laser beam in the irradiated region. This adjustment mechanism enlarges the irradiated region in the width direction of welding as compared with irradiation without the adjustment mechanism. The adjustment mechanism adjusts the shape of the irradiated region and the distribution of the irradiation energy density such that the distribution of the quantity of heat input (J) by a laser beam in the width direction of welding exhibits a profile in which the quantity of heat input in a central portion in the width direction is smaller than the quantity of heat input at an end in the width direction. In the present third embodiment, a diffractive optical element (DOE) is provided as such an adjustment mechanism in laser torch 40. By providing such an adjustment mechanism (DOE), the quantity of heat input to the weld can be suppressed to thereby suppress the amount of generated intermetallic compound, so that a wide weld bead can be formed. Consequently, the joint strength of the weld can be ensured.

In the present third embodiment, the output from the laser-beam irradiation device constituted of laser torch 40 and laser oscillator 60 is constant. Also, in the arc welding device constituted of welding torch 10 and welding power supply 30, the average value of the welding current is oscillated at a frequency between frequencies f1 and f2.

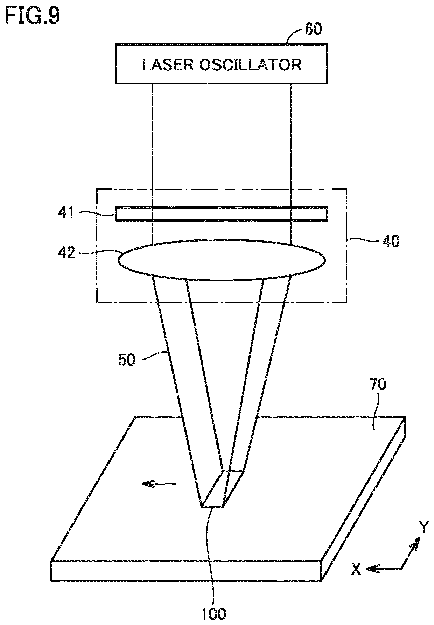

Fig. 9 is a diagram schematically showing a configuration of laser torch 40 according to the third embodiment. Referring to Fig. 9, laser torch 40 includes a DOE 41 and a lens 42. Laser beams output from laser oscillator 60 are applied to base material 70 through DOE 41 and lens 42, so that an irradiated region 100 is formed in base material 70.

DOE 41 processes laser beams received from laser oscillator 60 into a desired beam pattern with the help of a diffraction phenomenon. Specifically, DOE 41 geometrically disperses incident light received from laser oscillator 60 and shapes emitted laser beams such that irradiated region 100 on base material 70 is increased in width as compared with irradiation without DOE 41 and is formed in a substantially rectangular shape.

Lens 42 concentrates laser beams processed by DOE 41 and outputs the concentrated laser beams toward base material 70.

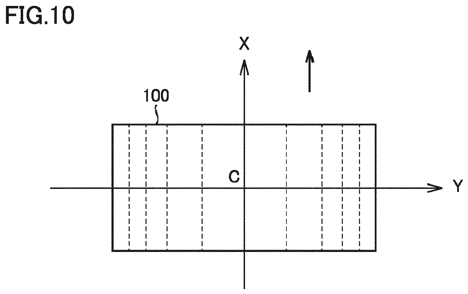

Fig. 10 is a diagram showing an exemplary two-dimensional shape of irradiated region 100. In Fig. 10, a direction of an X axis represents a direction of movement of laser torch 40 and a direction of a Y axis represents a width direction of welding. Referring to Fig. 10, DOE 41 processes laser beams such that irradiated region 100 is in a substantially rectangular shape.

A group of dotted lines represent a distribution of a laser irradiation energy density. As shown, in irradiated region 100, DOE 41 shapes a laser beam such that the irradiation energy density is higher from center C in the width direction (the direction of the Y axis) toward an end in the width direction.

Although the present example describes irradiated region 100 that includes: opposing sides in parallel to the direction of movement of laser torch 40 (the direction of the X axis) as short sides; and opposing sides in parallel to the width direction (the direction of the Y axis) as long sides, irradiated region 100 may be in a substantially square shape or include opposing sides in parallel to the direction of movement of laser torch 40 (the direction of the X axis) as long sides.

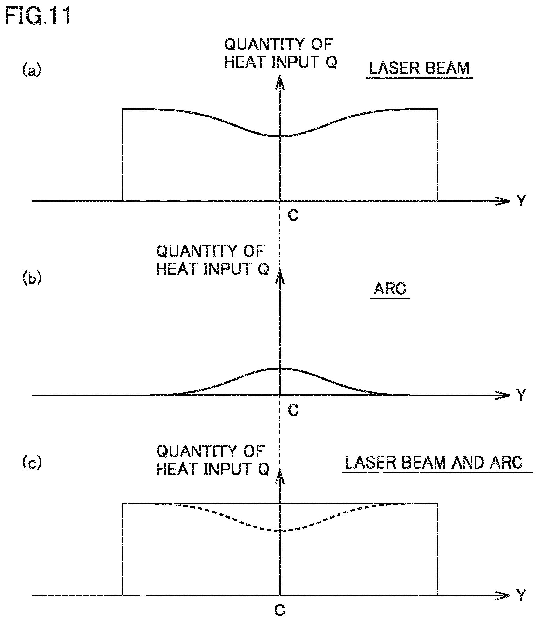

Fig. 11 shows a distribution of a quantity of heat input in a width direction of welding. Fig. 11(a) shows a distribution of a quantity of heat input by a laser beam and Fig. 11(b) shows a distribution of a quantity of heat input by an arc. Fig. 11(c) shows a distribution of the sum of the quantity of heat input by a laser beam and the quantity of heat input by an arc. In other words, Fig. 11(c) shows a distribution of the total quantity of heat input by a laser beam and an arc. In each figure, the ordinate represents a quantity of heat input Q and the direction of the Y axis represents the width direction of welding. Quantity of heat input Q represents a total quantity of heat input (J) from start to end of welding at each point in the width direction.

Referring to Fig. 11, by irradiation with a laser beam to form irradiated region 100 shown in Fig. 10, a distribution of the quantity of heat input by a laser beam exhibits such a profile that the quantity of heat input is small at center C in the width direction and increases toward ends as shown in Fig. 11(a). For a reference purpose, if a two-dimensional shape of a region irradiated with a laser beam is circular, the quantity of heat input would be highly likely to be large at the center in the width direction and smaller toward ends in the width direction even though the irradiation energy density in the irradiated region is smaller at the center and higher in a peripheral area.

A distribution of the quantity of heat input by an arc exhibits a profile in which the quantity of heat input is large at center C in the width direction and smaller toward ends in the width direction as shown in Fig. 11(b). Thus, the heat distribution of the sum of the quantity of heat input by a laser beam and the quantity of heat input by an arc is substantially uniform in the width direction as shown in Fig. 11(c).

In other words, the profile of the quantity of heat input by a laser beam is determined in consideration of the profile of the quantity of heat input by an arc such that the profile of the heat distribution of the sum of the quantity of heat input by a laser beam and the quantity of heat input by an arc is substantially uniform in the width direction. Based on the profile of the quantity of heat input by a laser beam, the shape of laser-beam irradiated region 100 and the distribution of the irradiation energy density (the shape and the distribution of the irradiation energy density shown in Fig. 10) are determined, and the configuration of DOE 41 that implements such irradiated region 100 is determined.

Alternatively, DOE 41 may be configured to obtain the profile of the quantity of heat input by a laser beam as shown in Fig. 11(a), and the output from welding torch 10 may be adjusted by welding power supply 30 such that the profile of the heat distribution of the sum of the quantity of heat input by a laser beam and the quantity of heat input by an arc is substantially uniform in the width direction.

Since mechanical characteristics of a weld are determined by the quantity of heat input to the weld and the heat distribution in each welding process, desired mechanical characteristics in the weld can be obtained by adjusting the sum of the quantity of heat input by a laser beam and the quantity of heat input by an arc as described above. Then, the sum of the quantity of heat input by a laser beam and the quantity of heat input by an arc is set uniform in the width direction, to thereby allow formation of a weld bead of high quality without concentration of a generated intermetallic compound in one part.

Particularly in welding for dissimilar material welding (for example, welding between an aluminum alloy sheet and a hot-dip galvanized steel sheet), the amount and the distribution of the molten metal should be controlled for controlling the amount and the distribution of generated intermetallic compound. In the present embodiment, the adjustment mechanism as described above adjusts the profile of the quantity of heat input by a laser beam, to thereby allow adjustment of: mainly, melting of the base material; the width of the weld bead; and the depth (the penetration depth) of the molten weld pool and the distribution thereof. Further, welding power supply 30 adjusts the output from welding torch 10, to thereby allow adjustment of: mainly, melting of the weld wire; and the amount of molten metal.

As set forth above, according to the present third embodiment, DOE 41 capable of forming the laser-beam irradiated region shown in Fig. 10 is provided, so that the distribution of the quantity of heat input in the width direction exhibits the profile as shown in Fig. 11. Therefore, a weld bead with a large width can be formed while suppressing the quantity of heat input to the weld to thereby suppress the amount of generated intermetallic compound. Consequently, the joint strength of the weld can be ensured.

According to the present third embodiment, by adjusting the distribution (profile), in the width direction, of the sum of the quantity of heat input by a laser beam and the quantity of heat input by an arc, desired mechanical characteristics in the weld can be obtained. Further, by causing the distribution in the width direction of the sum of the quantity of heat input by a laser beam and the quantity of heat input by an arc to be uniform in the width direction, a weld bead of high quality without concentration of a generated intermetallic compound in one part can be formed.

Further, the adjustment mechanism (DOE 41) as above adjusts the profile of the quantity of heat input by a laser beam, to thereby allow adjustment of: melting of the base material; the width of the weld bead; and the depth (penetration depth) and the distribution of the molten weld pool. Further, welding power supply 30 adjusts the output from welding torch 10, to thereby allow adjustment of: melting of the weld wire; and the amount of molten metal.

In the above-described third embodiment, the arc output (welding current) is cyclically changed, but the laser output may be cyclically changed as described in the second embodiment.

In the above-described third embodiment, laser-beam irradiated region 100 as shown in Fig. 10 is formed with the use of DOE 41. In place of the DOE, however, a laser scanning device capable of scanning base material 70 with a laser beam applied to base material 70 may be provided in the laser torch. Also, the laser scanning device may scan the base material with a laser beam to thereby form an irradiated region as in the third embodiment.

In each of the above-described embodiments, arc welding is performed by means of metal arc welding (MAG welding, MIG welding, or the like) using weld wire 20, but may be performed by means of non-metal arc welding (TIG welding or the like) using an electrode of a non-consumable material (tungsten or the like) in place of weld wire 20.

In each of the above-described embodiments, one of the arc output (the welding current) and the laser output is cyclically changed, but the arc output and the laser output may be combined and cyclically changed in synchronization with each other. Thereby, protrusions and recesses in the penetration shape and in IMC layer 82 can be more effectively formed.

Although the present invention has been described and illustrated in detail, it is clearly understood that the same is by way of illustration and example only and is not to be taken by way of limitation, the scope of the present invention being interpreted by the terms of the appended claims.

## Claims

1. A laser-arc hybrid welding apparatus (1) used for dissimilar material welding, the laser-arc hybrid welding apparatus (1) comprising:
a laser-beam irradiation device (60, 40) that irradiates a weld with a laser beam; and
an arc welding device (30, 10) that generates an arc between the arc welding device and the weld, wherein
at least one of the laser-beam irradiation device and the arc welding device changes an output from the at least one of the laser-beam irradiation device and the arc welding device at a frequency between a first frequency and a second frequency,
at the first frequency, an output change in a welding progressing direction occurs in a cycle of 12 mm when welding is performed at a prescribed welding speed,
at the second frequency, the output change occurs in a cycle of 2 mm when welding is performed at the prescribed welding speed, and
the prescribed welding speed is from 0.8 m/min to 2.0 m/min.

2. The laser-arc hybrid welding apparatus according to claim 1, wherein
the laser-beam irradiation device includes an adjustment mechanism (41) that adjusts a shape of an irradiated region irradiated with a laser beam,
the adjustment mechanism
enlarges the irradiated region in a width direction of welding as compared with irradiation without the adjustment mechanism in the laser-beam irradiation device, and
adjusts the shape of the irradiated region such that a distribution, in the width direction, of a quantity of heat input by a laser beam exhibits a prescribed profile, and
the prescribed profile shows that the quantity of heat input in a central portion in the width direction is equal to or smaller than the quantity of heat input at an end in the width direction.

3. The laser-arc hybrid welding apparatus according to claim 1 or 2, wherein
the laser-beam irradiation device changes a laser output at the frequency, and
the arc welding device generates an arc at a constant average value of a welding current.

4. The laser-arc hybrid welding apparatus according to claim 1 or claim 2, wherein
the arc welding device causes oscillation of an average value of a welding current at the frequency, and
the laser-beam irradiation device irradiates the weld with a laser beam at constant output power.

5. The laser-arc hybrid welding apparatus according to claim 4, wherein a range in which the average value of the welding current changes at the frequency is from 10A to 100A.
